# EUROPÄISCHE PATENTSCHRIFT

(11) **EP 1 366 667 B1**
(45) Veröffentlichungstag und Bekanntmachung des Hinweises auf die Patenterteilung: **05.03.2008**
(21) Anmeldenummer: 02405439.7
(22) Anmeldetag: 31.05.2002
(51) Int. Cl.: A21C 3/06

(54) **Vorrichtung und Verfahren zum Herstellen von gewickelten Teigprodukten**
Apparatus and process for making rolled dough products
Dispositif et procédé de fabrication des produits pâteux roulés

(43) Veröffentlichungstag der Anmeldung: 03.12.2003
(73) Patentinhaber: SEEWER AG, CH-3400 Burgdorf (CH)
(72) Erfinder: Tokar, Ludovit, 3428 Wiler b. Utzenstorf (CH)
(74) Vertreter: Roshardt, Werner Alfred

(56) Entgegenhaltungen:
- EP-A- 0 360 498
- EP-A- 1 256 279
- WO-A-01/41574
- DE-A- 4 402 346
- DE-C- 444 857
- DE-C- 551 009
- FR-A- 768 213

## Beschreibung

### Technisches Gebiet

Die Erfindung betrifft gattungsmässig eine Vorrichtung zum Wickeln eines Teigstücks, umfassend eine Biegeende-Freigabevorrichtung zur Freigabe eines vorderen Endes eines angeförderten Teigstücks und eine in einem Abstand zur Biegeende-Freigabevorrichtung angeordnete Biegeende-Umlenkvorrichtüng zum Umlenken des von der Biegeende-Freigabevorrichtung um eine freie Biegelänge vorstehenden vorderen Endes des angeförderten Teigstücks, so dass das Teigstück eingeschlagen und gewickelt werden kann. Weiter betrifft die Erfindung eine Vorrichtung und ein Verfahren zum Herstellen von gewickelten Teigprodukten, wobei in einem Eingangsbereich einer Wickelvorrichtung ein Einschlag eines angeförderten Teigstücks bewirkt und in einem nachfolgenden Wickelkanal das Teigstück aufgewickelt wird.

### Stand der Technik

Aus der EP 0 204 409 A1 (Rheon) ist eine Vorrichtung der gattungsgemässen Art bekannt. Das angeförderte Teigstück wird zwischen zwei Walzen hindurch geführt. Der Wickelvorgang wird hinter dem Walzenpaar dadurch eingeleitet, dass das vordere Ende des Teigstücks mit einer eingangsseitig des Wickelkanals angeordneten Umlenkplatte nach oben gebogen bzw. umgelenkt wird. Die Umlenkplatte befindet sich unmittelbar unter dem Förderband und lenkt letzteres periodisch aus, so dass eingangsseitig des Wickelkanals vorübergehend eine Rampe entsteht. Wenn das Teigstück aufgrund der Umlenkung auf das, vom unteren Förderband beabstandete obere Förderband des Wickelkanals trifft und von diesem umgelenkt und eingeschlagen wird, wird die Umlenkplatte wieder abgesenkt. Das heisst, zu Beginn des Wickelvorgangs wird das Teigstück in eine Schräglage versetzt, um das Umschlagen des vorderen Teigendes zu erleichtern.

Die EP 0 360 498 A (Rheon) hat eingangsseitig an einem Wickelkanal eine unveränderbare (unten liegende) Eingangsrampe und eine oben liegende Umlenkrampe. Dabei kann über eine Walze der vertikale Abstand und die Neigung der Umlenkrampe eingestellt werden, um die Vorrichtung für den jeweiligen Produktionsdurchgang z. B. abhängig von der verwendeten Teigsorte anzupassen.

Eine weitere Wickelvorrichtung dieser Art ist aus der EP 0 327 856 A1 (C.I.M.) bekannt. Auch bei dieser wird eingangsseitig des Wickelkanals das Transportband aus der flachen, horizontalen Lage periodisch in eine Rampe verformt, um das Wickeln zu erleichtern. Zusätzlich ist mit einer manuellen Vorrichtung die Breite der Eingangsöffnung des Wickelkanals von Produktionslauf zu Produktionslauf justierbar.

Eine weitere Möglichkeit zur Einleitung des Wickelvorgangs ist aus der WO 99/49736 (Fritsch) bekannt. Die in Transportrichtung vorderen Ecken des Teigstücks werden mit zwei Greifrädern erfasst und in Kontakt mit einem rückwärts laufenden oberen Förderband gebracht. Um das Aufgreifen der genannten Ecken zu erleichtern, wird das Transportband (auf welchem das Teigstück transportiert wird) mit einer separaten, vertikal verstellbaren Welle derart verändert, dass in an sich bekannter Weise eine Rampe entsteht. Sobald der Einschlag des Teigendes erzeugt ist, wird die genannte verstellbare Welle abgesenkt, so dass das Teigstück in den Wickelkanal gelangt und der Wickelvorgang durchgeführt werden kann.

Die aus der WO 99/49736 bekannte Ausführungsform ist mechanisch aufwändig. Die Hochstellmittel (Greifräder) müssen zyklisch abgesenkt und angehoben werden, um in Kontakt mit den Ecken des Teigstücks gebracht zu werden und nachfolgend den Weg frei für den Wickelkanal zu geben.

Nachteilig bei den bekannten Maschinen ist, dass sie nicht wahlweise für ungefüllte und gefüllte Teigprodukte verwendet werden können.

### Darstellung der Erfindung

Aufgabe der Erfindung ist es, eine Vorrichtung zum Herstellen von gewickelten Teigprodukten anzugeben, welche einfach abläuft und zuverlässig funktioniert und wahlweise zum Wickeln von ungefüllten und gefüllten Teigprodukten geeignet ist.

Die Lösung der Aufgabe ist durch die Merkmale des Anspruchs 1 definiert.

Die erfindungsgemässe Vorrichtung hat einen Eingangsbereich zum Bewirken eines Einschlags eines angeförderten Teigstücks, einen Wickelkanal zum Aufwickeln des Teigstücks, eine Biegeende-Freigabevorrichtung zur Freigabe eines vorderen Endes des angeförderten Teigstücks, wobei die Biegeende-Freigabevorrichtung eine Übergangsstelle zwischen Eingangsbereich und Wickelkanal umfasst. Die Übergangsstelle ist zwischen Eingangsbereich und Wickelkanal zwischen einer in Transportrichtung hinteren und einer in Transportrichtung vorderen Position hin und her bewegbar, derart dass sie jeweils beim bzw. nach dem Einschlagen des vorderen Endes des angeförderten Teigstücks von einer in Transportrichtung vorderen in eine hintere Position bzw. umgekehrt bewegbar ist.

Dieser Lösungsansatz ermöglicht sowohl das Wickeln von ungefüllten als auch von gefüllten Teigprodukten. Die bewegbare Übergangsstelle erlaubt eine gezielte Freigabe des Wickelkanals sowie eine präzise und dem zu wickelnden Teigprodukt angepasste Führung des Teigstücks. Sie lässt sich mit an sich bekannten mechanischen Elementen realisieren.

Aufgrund der Biegeende-Freigabevorrichtung zur Freigabe eines vorderen Endes eines angeförderten Teigstücks löst sich das vordere Ende des Teigstücks, welches zunächst z. B. auf einem Transportförderband aufliegt, von der Auflage und beginnt sich im freien Raum fortzubewegen. Weiter ist eine in einem bestimmten Abstand zur Biegeende-Freigabevorrichtung angeordnete Biegeende-Umlenkvorrichtung vorgesehen. Diese Biegeende-Umlenkvorrichtung unterbricht gewissermassen die geradlinige Bewegung des freien Biegeendes des Teigstücks und lenkt es um, so dass das Teigstück eingeschlagen und gewickelt werden kann. Die Biegeende-Freigabevorrichtung umfasst eine Rampe mit im wesentlichen gleichbleibender Steigung, Gemäss der Erfindung sind nun Mittel zum Einstellen des die freie Biegelänge bestimmenden Abstandes zwischen Biegeende-Freigabevorrichtung und Biegeende-Umlenkvorrichtung vorgesehen.

Mit diesen Einstellmitteln wird es möglich, mit ein und derselben Maschine ganz unterschiedliche Teigstücke optimal zu verarbeiten. Insbesondere kann je nach dem, ob eine Füllung vorhanden ist oder nicht und wie gross die Menge der Füllung ist, der Wickelbereich abgestimmt werden. Bei der Vorrichtung gemäss Anspruch 1 ist die Rampensteigung im wesentlichen konstant (z.B. 25° +/- 2°). Es gibt also kein zyklisches Hochschwenken einer Rampe aus einer flachen Transportebene wie bei der EP 0 327 856 A1. Es wurde nämlich gefunden, dass die auf das Teigprodukt abgestimmte Wahl der freien Biegelänge auf die Qualität und Zuverlässigkeit des Wickelvorgangs einen vorteilhaften Einfluss hat. So sollte beispielsweise die freie Weglänge für dicke Teigstücke anders sein als für dünne. Es kann mit der erfindungsgemässen Vorrichtung auch auf die Konsistenz des Teigs eingegangen werden.

Vorzugsweise sind die Biegeende-Freigabevorrichtung und die Biegeende-Umlenkvorrichtung Fördermittel (z.B. Riemenförderer) mit einem Antrieb, dessen Betriebsgeschwindigkeit vom Benutzer einstellbar ist. Die Einstellbarkeit kann z.B. im Rahmen von vorgegebenen Geschwindigkeitsstufen oder vordefinierten Programmen stattfinden. Der Bäcker kann folglich je nach Eigenart der verarbeiteten Teigprodukte eine etwas höhere oder eine etwas niedrigere Geschwindigkeit wählen. Für dickere Teigstücke (von z.B. 3 mm oder mehr) ist eine höhere Geschwindigkeit zu empfehlen als für dünnere (von z.B. weniger als 3 mm). Die maximale Betriebsgeschwindigkeit kann beispielsweise 40% höher sein als die minimale. Die höhere Geschwindigkeit gibt dem Teigstück eine höhere kinetische Energie, was dazu führt, dass mehr Energie für die Deformation des von der Biegeende-Umlenkvorrichtung umzulenkenden Endes zur Verfügung steht. Es ist natürlich auch möglich, eine Steuerung mit frei vorgebbarer Betriebsgeschwindigkeit vorzusehen.

Die Biegeende-Freigabevorrichtung hat wie bereits erwähnt eine Rampe, an deren ausgangsseitigen Ende eine plötzliche Richtungsänderung des Transportbandes stattfindet. Das mit ausreichend grosser Geschwindigkeit angeförderte Teigstück vermag die Richtungsänderung des Transportbandes nicht mitzumachen und bewegt sich in Folge dessen mehr oder weniger gradlinig in der durch die Rampe vorgegebenen Richtung bzw. Ebene fort. Es ist nicht zwingend, dass eine Rampe vorgesehen ist. Es ist auch denkbar, dass das Teigstück auf einem flachen Fördermittel ankommt und das die Biegeende-Freigabevorrichtung dadurch gebildet ist, dass das Fördermittel nach unten wegbiegt, so dass das Teigstück aufgrund seiner Geschwindigkeit geradeaus läuft und auf die Biegeende-Umlenkvorrichtung trifft.

Die erfindungsgemässe Vorrichtung ist vorzugweise mit einer Rampe mit einstellbarer Länge ausgestattet. Indem das ausgangsseitige Ende der Rampe in seiner Position relativ zur Biegeende-Umlenkvorrichtung eingestellt werden kann, wird gleichzeitig die freie Biegelänge verändert. Es ist auch möglich, die Rampe in der Steigung zu variieren d. h. die Steigung je nach Eigenschaft des zu verarbeitenden Teigstücks zu Beginn der Produktion (fest) einzustellen. Bei geeigneter Geometrie kann die Änderung der Steigung auch dazu genutzt werden, die freie Biegelänge einzustellen.

Bei einem erfindungsgemässen Verfahren zum Herstellen von gewickelten Teigprodukten, wird in einem Eingangsbereich einer Wickelvorrichtung ein Einschlag eines in Transportrichtung vorderen Endes eines angeförderten Teigstücks bewirkt und in einem nachfolgenden Wickelkanal das Teigstück aufgewickelt. Eine Übergangsstelle zwischen Eingangsbereich und Wickelkanal wird von einer bezüglich des Einschlags in Transportrichtung vorderen (d.h. einer der Ausgangseite zu gerichteten) in eine bezüglich des Einschlags in Transportrichtung hintere (d.h. einer der Eingangsseite zu gerichtete) Position bewegt.

Bei einer bevorzugten Variante des Verfahrens wird der Einschlag des Teigstücks mit Hilfe einer Rampe im Eingangsbereich bewirkt. Durch die Bewegung der Übergangsstelle von ihrer in Transportrichtung vorderen in ihre hintere Position wird die Rampe verkürzt. Hat die Rampe ihre Aufgabe erfüllt, wird sie für die weiteren Verfahrensschritte, insbesondere für das Aufwickeln des Teigstücks nicht mehr benötigt. Die Verkürzung führt dazu, dass sich das bearbeitete Teigstück nach dem Einschlag unmittelbar im Wickelkanal befindet und dass ein gesonderter Transportschritt zwischen Einschlag und Wicklung entfällt.

Für gewisse Anwendungen ist es von Vorteil, wenn der Neigungswinkel der Rampe während ihrer Verkürzung im Wesentlichen konstant gehalten wird. Es gibt aber auch Situationen, in denen das geringfügige Variieren der Steigung während des Wickelungszyklus (z.B. um 2° bis 5°) nützlich ist. Auch bei konstanter Neigung kann z.B. mit mechanischen Verstellmechanismen dafür gesorgt werden, dass die (während des Betriebs der Maschine) konstante Steigung bei einem Wechsel auf ein anderes Teigprodukt neu bzw. anders eingestellt werden kann

Vorzugsweise wird zum Bewirken des Einschlags das vordere Ende des Teigstücks angehoben und in Kontakt mit einem Hebeabschnitt einer entgegen der Transportrichtung wirkenden Fördervorrichtung gebracht. Das nachfolgende Aufwickeln des Teigstücks erfolgt dann mit Hilfe eines Wickelabschnitts derselben Fördervorrichtung. Eine Übergangsstelle zwischen dem Hebeabschnitt und dem Wickelabschnitt wird nach dem Anheben des Teigstücks verschoben, so dass der Hebeabschnitt verlängert wird.

Mit Vorteil ist die erste Übergangsstelle zwischen dem Eingangsbereich und dem Wickelkanal gegenüber der zweiten Übergangsstelle zwischen dem Hebeabschnitt und dem Wickelabschnitt ausgebildet. Im Lauf des Verfahrens werden die beiden Übergangsstellen im Wesentlichen gegensinnig zueinander bewegt, d.h. dass sich die zweite Übergangsstelle nahe ihrer vorderen Position befindet, wenn die erste Übergangsstelle ihre hintere Position einnimmt und dass sie sich nahe ihrer hinteren Position befindet, wenn die erste Übergangsstelle ihre vordere Position einnimmt. Kurzzeitig, insbesondere wenn die beiden Übergangsstellen mit einem gewissen Zeitversatz ihre Positionen ändern, treten auch andere Anordnungen der beiden Übergangsstellen auf. Zudem kann es nützlich sein, wenn die genannten Bewegungen je nach Eigenart des Teigstückes unterschiedlich ablaufen. die Maschine muss dazu die entsprechenden Einstellmöglichkeiten zur Verfügung stellen.

Vorzugsweise ist bei einer Vorrichtung zum Herstellen von gewickelten Teigprodukten die bewegbare Übergangsstelle zwischen Eingangsbereich und Wickelkanal an einem unteren, das Ausgangsteigstück tragenden Fördermittel ausgebildet. Das Fördermittel, welches das Teigstück und das gerollte Teigprodukt transportiert, bildet so gleichzeitig auch die Über gangsstelle, welche zwischen einer in Transportrichtung hinteren und einer in Transportrichtung vorderen Position hin und her bewegbar ist. Dies vermindert die Anzahl mechanischer Teile und damit die Komplexität der Vorrichtung verglichen mit einer Ausführung, bei welcher die bewegbare Übergangsstelle mittels eines zusätzlichen Bauelements realisiert ist, z.B. einer bewegbaren Walze oder eines verschiebbaren Teils des Wickelkanals.

Mit Vorteil ist an einem oberen Fördermittel eine zweite Übergangsstelle ausgebildet, deren Position gegensinnig zur ersten Übergangsstelle veränderbar ist. Auch die zweite Übergangsstelle ist also zwischen einer in Transportrichtung vorderen und einer in Transportrichtung hinteren Position hin und her bewegbar. Sie kann gegensinnig und/oder gleichsinnig zur ersten Übergangsstelle bewegt werden.

Zwei bewegbare Übergangsstellen bieten den Vorteil, dass die Form des Eingangsbereichs, des Übergangs zwischen Eingangsbereich und Wickelkanal sowie des in Transportrichtung hinteren Bereichs des Wickelkanals sehr genau und flexibel dem jeweiligen zu wickelnden Teigprodukt und dem Bearbeitungsschritt angepasst werden kann. Durch eine gleichzeitige, gegenläufige Bewegung zweier Übergangsstellen erfolgt zudem eine wesentlich schnellere Formänderung des Eingangsbereichs, als wenn nur eine einzelne Bewegung ausgeführt wird.

Eine bevorzugte Ausführungsform des zweiten Lösungsansatzes der Erfindung weist im Eingangsbereich eine Rampe auf. Diese führt das Teigstück auf einen Hebeabschnitt eines oberen Fördermittels zu (Biegeende-Umlenkvorrichtung). Zwischen der Rampe und nachfolgenden unteren Fördermitteln besteht ein gewisser Winkel, der dazu führt, dass der in Transportrichtung vordere Teil des Teigstücks am Ende der Rampe angehoben wird. In geeignetem Abstand trifft dann dieser Teil auf den Hebeabschnitt, welcher einerseits ein weiteres Heben des Teigstücks bewirkt und andererseits das Einschlagen einleitet. Dass der Teig vor dem Umschlagen bereits einen gewissen Winkel (von 7, B. etwa 25°) zur Horizontalen besitzt, erleichtert das Einschlagen zusätzlich, indem der benötigte Winkel bis zum Umschlagen um den Neigungswinkel der Rampe vermindert ist. Die Rampe kann eine mehr oder weniger konstante (bzw. zu Beginn eines Produktionslaufs vorgebbare) Neigung haben.

Das Teigstück kann auch dadurch von einer Unterlage angehoben werden, indem die Unterlage erst horizontal verläuft und dann eine Umlenkung (d.h. eine Richtungsänderung) aufweist, so dass ihr weiterer Verlauf schräg nach unten führt. Gegenüber der Umlenkstelle sind verfahrbare Hebemittel, z.B. Rollen, Walzen oder eine Fördereinrichtung angeordnet, welche den über die Umlenkstelle (Biegeende-Freigabepunkt) horizontal überstehenden vorderen Teil des Ausgangsteigstücks aufnehmen und nach oben anheben kann. Ist das Teigstück vom Hebemittel erfasst, fährt dieses von der Unterlage weg, so dass ein Durchgang zwischen Unterlage und Hebemittel freigegeben wird. Eine solche Lösung hat gegenüber einer Rampe insbesondere den Nachteil, dass der benötigte Winkel bis zum Umschlagen grösser ist.

Mit Vorteil hat die Rampe aufgrund der veränderbaren Übergangsstelle eine sich verändernde Länge. Vorzugsweise bleibt dabei aber ihre Steigung in etwa konstant. Die Rampe führt das Ausgangsteigstück einem Hebeabschnitt eines oberen Fördermittels zu. Hat sie diese Aufgabe erfüllt, wird sie für die weiteren, im Eingangsbereich erfolgenden Bearbeitungsschritte, nämlich für das Einschlagen, den Beginn des Wickelvorgangs und die Weiterförderung in den Wickelkanal, nicht mehr benötigt. Wird die Rampe nach erfolgter Zuführung des Teigstücks zum oberen Fördermittel verkürzt, befindet sich also das bearbeitete Teigstück unmittelbar in einem ersten Bereich des Wickelkanals. Eine Förderung des Teigprodukts aus dem Rampenbereich in den Wickelkanal entfällt. Eine kompakte Vorrichtung und ein schnellerer Betrieb derselben sind die Folgen.

Eine bevorzugte Ausführungsform der Erfindung umfasst im Eingangsbereich ein entgegen zur Transportrichtung nach unten geneigtes Einschlagsmittel. Vorzugsweise ist ein bandartiges Fördermittel vorgesehen, welches den vom Fördermittel angeförderten Teil des Teigstücks wieder nach unten führt und damit den Einschlag zwangsweise bewirkt. Das Fördermittel unterstützt diesen Prozess also aktiv, indem es den angeförderten Teil des Teigstücks weiter, entgegen der eigentlichen Transportrichtung und wieder nach unten, fördert. In einer vereinfachten Form kann es sich dabei um eine oder mehrere fest montierte Platten oder Bleche handeln, mit einer Oberfläche, auf welcher der Teig gleitet, z.B. Teflon, welche den vom oberen Fördermittel angeförderten Teil des Teigstücks wieder nach unten führen und damit den Einschlag zwangsweise bewirken.

Das Fördermittel, welches das Ausgangsteigstück und das verarbeitete Produkt trägt, und auch ein Wickelmittel, welches zum Wickeln des Teigprodukts dient, können z.B. als bandartiges Fördermittel und insbesondere als Riemenförderer ausgestaltet sein. Ein solcher umfasst mehrere parallel laufende beabstandete Riemen, auf welchen der Teig auf liegt. Wird ein solches Fördermittel eingesetzt, ist es vorteilhaft, Übergangsstellen durch ein Umlenkelement (z.B. eine Rolle, eine Walze oder eine Stange) des bandartigen Fördermittels zu realisieren. Die Bewegbarkeit einer solchen Übergangsstelle wird erreicht, indem das entsprechende Umlenkelement durch eine Tragkonstruktion bewegbar gelagert bzw. gehalten ist. Dass die Übergangsstelle lediglich durch Bewegen eines Umlenkelements verschieden positioniert werden kann, vermeidet eine Bewegung massiver Bauelemente oder ganzer Baugruppen. Ausserdem kann die Form des Fördermittels und dadurch die Form der Rampe, des Eingangsbereichs und des Wickelkanals auf einfache Art und Weise verändert werden. Der Riemenförderer bietet in dieser Hinsicht den Vorteil, dass Betätigungselemente des bewegbaren Umlenkelements zwischen den Riemen durch die Ebene des Förderers hindurch greifen können, was eine kompakte Bauform der Vorrichtung ermöglicht. Ausserdem erlaubt ein Riemenförderer eine fast beliebige Form des Förderkanals, indem die Riemen nicht alle in derselben Ebene liegen müssen, sondern mittels entsprechender Umlenkrollen mit unterschiedlichem Durchmesser auch eine Fördermulde oder andersartige, dem gefertigten Teigprodukt angepasste Förderkanäle bilden können. Durch einen Riemenförderer wird auch die Reinigung der Vorrichtung erleichtert, indem eine Reinigungsflüssigkeit zwischen den Riemen hindurch verteilt werden kann und so auf einfache Art und Weise sämtliche zu reinigenden Stellen erreicht.

Ein Umlenkelement wird mit Vorteil an einem um eine Schwenkachse bewegbaren Schwenkmechanismus gelagert. Dadurch wird die Bahn des Umlenkelements genau festgelegt und es wird gewährleistet, dass die Fördermittel stets die gewünschte optimale Spannung aufweisen. Der Schwenkmechanismus kann insbesondere mit einem entsprechend geformten Hebel realisiert sein, welcher an einem Ende an einer Schwenkachse gelagert ist und an seinem anderen Ende das Umlenkelement, z.B. eine Walze, trägt.

Es sind auch andere Möglichkeiten der Lagerung des Umlenkelements denkbar, z.B. indem es entlang von Schienen bewegt wird oder indem ein Exzenter verwendet wird, auf dessen Rand die Fördermittel gleiten.

Eine bevorzugte Ausführungsform der Erfindungweist elastisch nachgiebige Begrenzungen des Wickelkanals auf. Diese passen sich innerhalb gewissen Grenzen, welche durch die Wahl des Materials, die gewählte Spannung und die Anzahl und Anordnung der Umlenkmittel und Auflagen bestimmt werden können, dem verarbeiteten Teigprodukt, dessen Grösse und Beschaffenheit, sowie dem aktuellen Bearbeitungsschritt selbständig an. Sind die Begrenzungen als Förderbänder ausgeführt, ermöglicht die Elastizität derselben eine dem Teigprodukt entsprechende Form des Wickelkanals. Sind die Begrenzungen als Riemenförderer realisiert, führt eine gewisse Elastizität zu einer noch besseren Anpassung des Wickelkanals an die auszuführende Aufgabe. Weil aufgrund der Elastizität der Fördermittel ihre Spannung in weniger engen Grenzen liegen muss, wird die Ausgestaltung der Über gangsstellen als Umlenkelemente erleichtert; insbesondere müssen sie bei Positionsänderungen weniger komplizierte Bewegungen ausführen.

Eine elastisch nachgiebige Begrenzung kann u. a. dadurch gebildet werden, dass das Fördermittel zwei einseitige Umlaufwalzen hat, um welche ein endloses Band geführt ist und dass zwischen dem Umlenkelement und der ausgangsseitig des Wickelkanals angeordneten Umlenkwalze das Band unterstützungsfrei gespannt ist. Dabei wird auch hier das Band vorzugsweise durch mehrere beabstandete Riemen gebildet, dies erlaubt es insbesondere auch, quer zur Transportrichtung Bereiche unterschiedlicher Elastizität vorzusehen. Wenn z.B. ein Teigprodukt an seinen äusseren Bereichen zusammengedrückt werden soll, damit es sich nicht selbständig wieder entrollt oder damit eine Füllung nicht austritt, an seinem inneren, gefüllten Teil aber geringere Druckkräfte erfahren soll, so können die Riemen in der Mitte eine geringere Spannung als die Riemen am Rand aufweisen.

Vorzugsweise weist die Vorrichtung an der Eingangsseite ihres Eingangsbereichs eine Walze auf. Diese fördert die angelieferten Ausgangsteigstücke weiter auf die Fördermittel. Wird die Geschwindigkeit der Walze geringer gewählt als die Geschwindigkeit der Fördermittel, so kann, je nach Reibung zwischen Teig und Walze bzw. Fördermittel, eine gewisse Streckung des Teigs erreicht werden, indem das vordere Ende des Teigstücks schneller bewegt wird als das hintere Ende und dadurch der Teig auseinander gezogen wird.

Bei ungefüllten Teigprodukten kann der Ausstoss der Maschine dadurch erhöht werden, dass die Stanzform um einiges kürzer gewählt wird als die effektiv benötigte Länge des Teigstücks. Vorgängig zum Wickelprozess wird dann das Teigstück gezielt gestreckt. Wird gegenüber der eingangsseitig der Wickelvorrichtung angeordneten Walze eine zweite Walze vorgesehen, welche mit der ersten Walze zusammenwirkt, so kann das Ausgangsteigstück gewalzt und damit vor der Verarbeitung stärker gestreckt werden. Dies einerseits durch den Druck der beiden Walzen auf das Teigstück, andererseits durch unterschiedliche Geschwindigkeiten der Walzen und der Fördermittel.

Aus der nachfolgenden Detailbeschreibung und der Gesamtheit der Patentansprüche ergeben sich weitere vorteilhafte Ausführungsformen und Merkmalskombinationen der Erfindung.

### Kurze Beschreibung der Zeichnungen

Die zur Erläuterung des Ausführungsbeispiels verwendeten Zeichnungen zeigen:
- Fig. 1: Eine erfindungsgemässe Vorrichtung zum Herstellen von gewickelten Teigprodukten in der Aufnahmestellung.
- Fig. 2: Die Vorrichtung gemäss Fig. 1 in der Wickelstellung.
- Fig. 3: Eine Detailansicht des Eingangsbereichs der Vorrichtung gemäss Fig. 1;
- Fig. 4a, b: Eine schematische Darstellung des Prinzips der variablen freien Biegelänge.

Grundsätzlich sind in den Figuren gleiche Teile mit gleichen Bezugszeichen versehen.

### Wege zur Ausführung der Erfindung

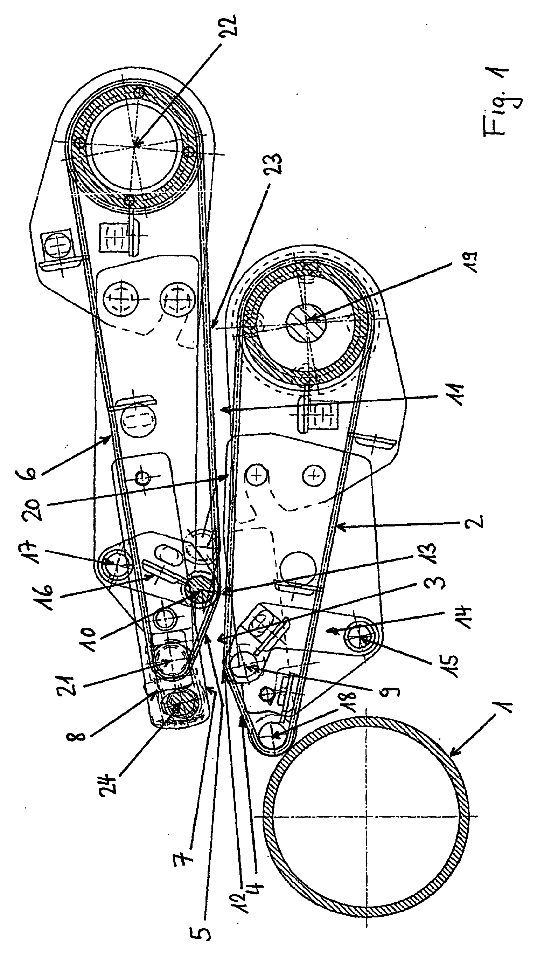

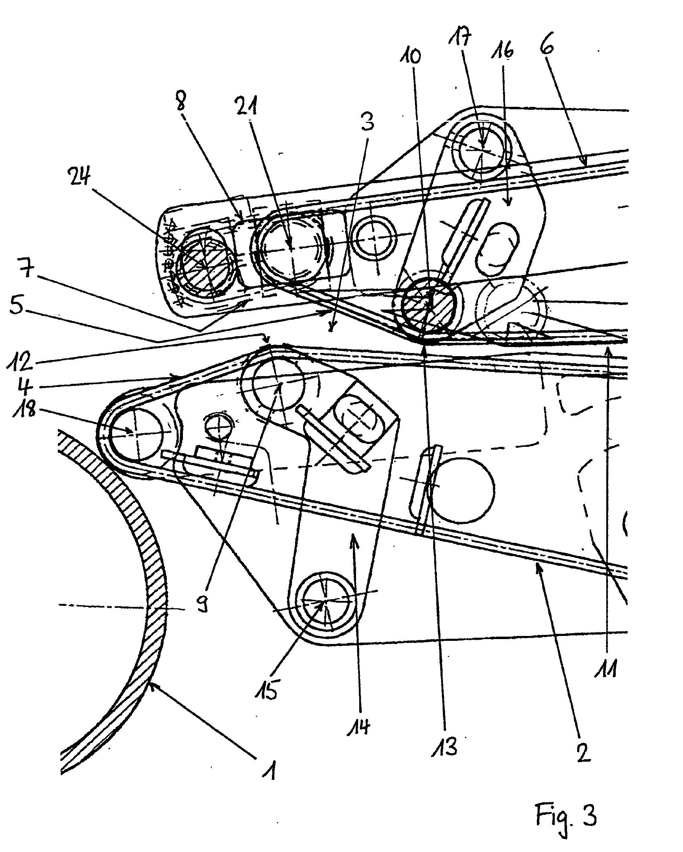

Fig. 1 zeigt eine erfindungsgemässe Vorrichtung zum Herstellen von gewickelten Teigprodukten in der Anfangsstellung. Diese Stellung wird eingenommen, wenn ein noch unbearbeitetes Teigstück der Vorrichtung zugeführt wird. Fig. 3 zeigt eine Detailansicht des Eingangsbereichs in dieser Stellung.

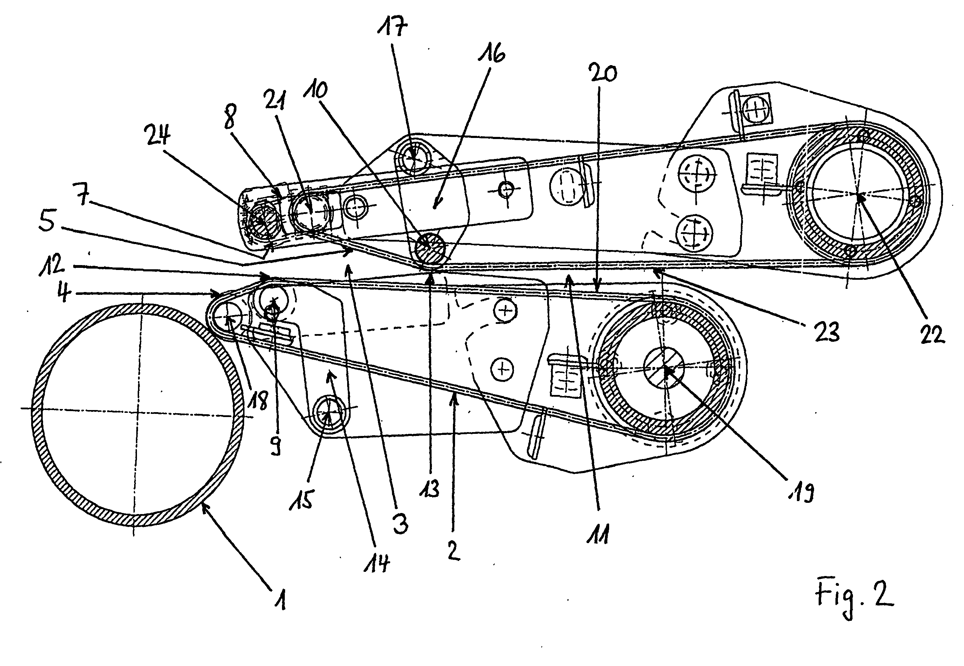

Die Vorrichtung umfasst eine Walze 1 zur Zuführung der unbearbeiteten Teigstücke. Diese werden der Walze mittels eines (nicht dargestellten) Fördermechanismus zugeführt und auf ihrer Oberfläche ca. 1/4 bis 1/3 einer Umdrehung mitgenommen. Sodann gelangen sie auf einen Riemenförderer 2. Dieser hat eine eingangsseitige (in Transportrichtung betrachtet: hintere) Umlaufwalze 18 nahe der Walze 1 und eine ausgangsseitige (in Transportrichtung betrachtet: vordere) Umlaufwalze 19 am entgegengesetzten Ende der Vorrichtung. Der Durchmesser der ausgangsseitigen Umlaufwalze 19 ist ca. 4-5 mal grösser als der Durchmesser der eingangsseitigen Umlaufwalze 18 und die höchstliegende Stelle des Umfangs der ausgangsseitigen Umlaufwalze 19 liegt etwas höher als die entsprechende Stelle der eingangsseitigen Umlaufwalze. Weiter ist eine Welle 9 zwischen den beiden Umlaufwalzen 18, 19, in der Nähe der eingangsseitigen Umlaufwalze 18, so positioniert, dass die höchstliegende Stelle ihres Umfangs ungefähr der entsprechenden Höhe der ausgangsseitigen Umlaufwalze 19 entspricht. Der Abstand der Welle 9 von der eingangsseitigen Umlaufwalze 18 beträgt in der in Fig. 1 dargestellten Stellung ungefähr 1/5 des Abstands der beiden Umlaufwalzen 18, 19. Der Durchmesser der Welle 9 entspricht ungefähr demjenigen der eingangsseitigen Umlaufwalze 18. Die Welle 9 ist seitlich an einem um eine Schwenkachse 15 gelagerten, ungefähr L-förmigen Hebel 14 befestigt und bildet so ein bewegbares Umlenkelement. Fig. 1 zeigt die Welle 9 in ihrer vorderen, Fig. 2 in ihrer hinteren Stellung.

Auf den beiden Umlaufwalzen 18, 19 und der Welle 9 laufen mehrere beabstandete endlose Riemen. Die ausgangsseitige Umlaufwalze 19 wird durch (nicht dargestellte) Antriebsmittel (Elektromotor, Getriebe etc.) angetrieben. Die Schwenkachse 15 des Hebels 14 befindet sich unterhalb des Bereichs, welcher von den umlaufenden Riemen begrenzt wird. Der Hebel 14 ist seitlich der unten umlaufenden Riemen angeordnet. Die Riemen bilden zwischen der eingangsseitigen Umlaufwalze 18 und der Welle 9 eine Rampe 4, welche einen vorgegebenen Winkel (von z.B etwa 25°) zur Horizontalen einschliesst. Sie fördert die von der Walze 1 zugeführten Teigstücke weiter in Transportrichtung und gleichzeitig nach oben; dies entspricht in den Figuren 1, 2 einer Umlaufrichtung im Uhrzeigersinn. Die Geschwindigkeit des Riemenförderers 2 entspricht ungefähr der Umfangsgeschwindigkeit der Walze 1. Sollen die Teigstücke leicht gestreckt werden, kann die Transportgeschwindigkeit der Rampe geringfügig höher gewählt werden. Die Lage der Schwenkachse 15 und die Länge des Hebels 14 sind relativ zum Riemenförderer 2 und zu den Umlaufwalzen 18 und 19 im vorliegenden Ausführungsbeispiel so gewählt, dass sich die Steilheit der Rampe 4 etwa um 2° verändert, wenn der Hebel 14 von der vorderen in die hintere Position bewegt wird. (Die Geometrie kann bei Bedarf auch derart bemessen sein, dass sich die Rampensteilheit stärker ändert, z.B. um 5°.)

Die Riemen bilden zwischen der Welle 9 und der ausgangsseitigen Umlaufwalze 19 eine ungefähr horizontale obere Transportfläche 20, welche sich in Transportrichtung vorwärts bewegt. Zwischen der Rampe 4 und der Transportfläche 20 ergibt sich also eine Übergangsstelle 12 in Form einer abgerundeten Umlenkstelle der Förderfläche, welche aus Rampe 4 und Transportfläche 20 gebildet wird. Die Form der Umlenkstelle ergibt sich durch die Eigenschaft des benutzten Fördermittels und den Durchmesser der Welle 9.

Oberhalb des Riemenförderers 2 ist ein weiterer Riemenförderer 6 positioniert. Dieser besteht aus einer eingangsseitigen Umlaufwalze 21 und einer ausgangsseitigen Umlaufwalze 22. Die eingangsseitige Umlaufwalze 21 befindet sich ungefähr oberhalb des Umlenkelements des unteren Riemenförderers 2, der Welle 9. Die ausgangsseitige Umlaufwalze 22 am entgegengesetzten Ende der Vorrichtung ist etwas weiter vorne positioniert als die ausgangsseitige Umlaufwalze 19 des unteren Riemenförderers 2. Der Durchmesser der ausgangsseitigen Umlaufwalze 22 ist wiederum ca. 4-5 mal grösser als der Durchmesser der eingangsseitigen Umlaufwalze 21 und die tiefstliegende Stelle des Umfangs der ausgangsseitigen Umlaufwalze liegt etwas tiefer als die entsprechende Stelle der eingangsseitigen Umlaufwalze. Weiter ist eine Welle 10 zwischen den beiden Umlaufwalzen 21, 22, in der Nähe der eingangsseitigen Umlaufwalze 21 so positioniert, dass die tiefstliegende Stelle ihres Umfangs ungefähr der entsprechenden Höhe der ausgangsseitigen Umlaufwalze 22 entspricht. Der Abstand der Welle 10 von der eingangsseitigen Umlaufwalze 21 beträgt ungefähr 1/7 des Abstandes der beiden Umlaufwalzen 21, 22. Die Welle 10 ist beidseitig von einem um eine Schwenkachse 17 gelagerten, geraden Hebel getragen (in der Fig. 1 ist nur der eine seitliche Hebel 16 sichtbar) und bildet so ein bewegbares Umlenkelement. Fig. 1 zeigt die Welle 10 in ihrer hinteren, Fig. 2 in ihrer vorderen Stellung.

Auf den beiden Umlaufwalzen 21, 22 und der Welle 10 laufen wiederum mehrere beabstandete endlose Riemen. Die ausgangsseitige Umlaufwalze 22 wird durch (nicht dargestellte) Antriebsmittel angetrieben. Die Schwenkachse 17 des Hebels 16 befindet sich oberhalb des Bereichs, welcher von den umlaufenden Riemen begrenzt wird. Der Hebel 16 ist seitlich der oben umlaufenden Riemen angeordnet. Die Riemen bilden zwischen der eingangsseitigen Umlaufwalze 21 und der Welle 10 einen Hebeabschnitt 5, welcher einen Winkel zur Horizontalen einschliesst. Die Verlängerung der Rampe 4 schneidet diesen Hebeabschnitt 5 in der in den Figuren 1, 3 dargestellten Aufnahmestellung ungefähr in seiner Mitte und zwar unter einem Winkel von weniger als 90°.

Zwischen der Welle 10 und der ausgangsseitigen Umlaufwalze 22 bilden die Riemen eine nahezu horizontale Wickelfläche 23, so dass zwischen ihr und der Transportfläche 20 ein Wickelkanal 11 gebildet wird, welcher sich in Transportrichtung leicht aufweitet. 7wischen dem Hebeabschnitt 5 und der Wickelfläche 23 ergibt sich also eine zweite Übergangsstelle 13 in Form eines abgerundeten stumpfen Winkels.

Der Hebeabschnitt 5 und die Wickelfläche 23 bewegen sich entgegen der Transportrichtung; dies entspricht in den Figuren 1, 2 einer Umlaufrichtung im Uhrzeigersinn. Damit die Teigprodukte im Wickelkanal 11 gleichzeitig gewickelt und in Transportrichtung befördert werden können, muss die Geschwindigkeit des oberen Riemenförderers 6 geringer sein als die Geschwindigkeit des unteren Riemenförderers 2, z.B. ungefähr halb so gross.

Am eingangsseitigen Ende des oberen Riemenförderers 6 ist ein weiterer Riemenförderer 8 angebracht. Dieser besitzt eine weitere Umlaufwalze 24, welche ungefähr denselben Durchmesser aufweist wie die eingangsseitige Umlaufwalze 21 des oberen Riemenförderers 6 und weiter hinten und etwas weiter unten positioniert ist als die Umlaufwalze 21.

Auf der Umlaufwalze 24 und zwischen den Riemen des oberen Riemenförderers 6 auf dessen eingangsseitigen Umlaufwalze 21 laufen wiederum mehrere beabstandete endlose Riemen. Die Riemen bewegen sich gemäss den Figuren. 1, 2 im Uhrzeigersinn und bilden auf der Unterseite einen Rückzugsabschnitt 7, welcher sich entgegen der Transportrichtung bewegt und entgegen der Transportrichtung leicht nach unten geneigt ist.

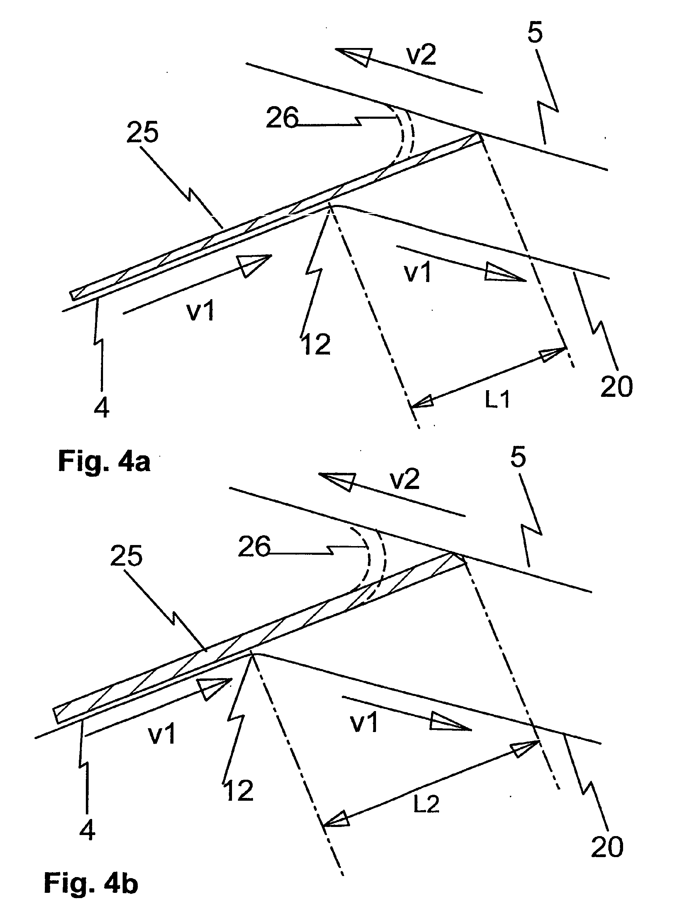

Bevor nun der Wickelvorgang im Detail beschrieben wird, soll der Grundgedanke der Erfindung anhand der Fig. 4a, b erläutert werden. Es sind schematisch die Rampe 4, die Übergangsstelle 12 und die Transportfläche 20 des Wickelkanals dargestellt. Ebenfalls ist der Hebeabschnitt 5 des oberen Riemenförderers 6 angedeutet. Das Teigstück 25 (welches in Fig. 4a dünner ist als in Fig. 4b) fährt mit einer Geschwindigkeit v1 (welche z.B. im Bereich 40-50 m/min liegt) die Rampe 4 hoch. An der Übergangsstelle 12 hebt sich das vordere Ende des Teigstücks 25 (aufgrund seiner hohen Geschwindigkeit und seiner Trägheit) vom Riemenförderer ab und bewegt sich durch den freien Raum fort, bis es den Hebeabschnitt 5 erreicht. Es entsteht auf diese Weise eine freie Biegelänge L1. Wenn das Ende des Teigstücks 25 mit dem Hebeabschnitt 5 in Kontakt kommt, wird es erfasst und aus seiner Laufbahn nach oben umgelenkt. Dies ist mit dem gestrichelten Biegeende 26 angedeutet.

Man erkennt also zwei wichtige Aspekte des Vorgangs: Zuerst wird das Biegeende freigegeben und dann wird es nach oben umgelenkt. Die Freigabe des Biegeendes wird durch die Vorrichtungselemente "Rampe + Übergangsstelle + Richtungsänderung des Bandes" bewirkt. Voraussetzung für die Freigabe ist, dass das Fördermittel mit einer gewissen Mindestgeschwindigkeit angetrieben ist. Das Umlenken des Biegeendes wird durch ein in geeignetem Abstand zur Biegeende-Freigabevorrichtung vorgesehenes Element erzeugt. Im vorliegenden Beispiel ist dies der schräg nach oben laufende Hebeabschnitt. (Es sei bemerkt, dass die Geschwindigkeit v2 des Riemenförderers des Hebeabschnitts 5 kleiner ist als die Geschwindigkeit v1 des Rampenförderers.)

Der Erfindung liegt die Erkenntnis zu Grunde, dass die Zuverlässigkeit des Wickelvorgangs verbessert werden kann, wenn die freie Biegelänge auf die Art des Teigstücks (typischerweise dessen Dicke) abgestimmt ist. Wenn ein dickes Teigstück (von z.B. mehr als 3 mm Dicke) verarbeitet werden soll, dann soll die freie Biegelänge wie in Fig. 4b gezeigt grösser sein, als wenn ein dünnes Teigstück (von z.B. weniger als 3 mm Dicke) verarbeitet wird (L2>L1). Je dicker bzw. steifer das Teigstück ist desto grösser soll die freie Biegelänge sein.

Bei der in den Fig. 1 bis 3 gezeigten Ausführungsform wird die Biegelänge dadurch verändert, dass die Position der Übergangsstelle 12 im Raum verändert wird. Alternativ oder zusätzlich kann auf die freie Biegelänge dadurch Einfluss genommen werden, dass die Lage des Hebeabschnitts 5 relativ zur Übergangsstelle verändert wird.

Wenn der Winkel zwischen der durch die Rampe 4 definierten Ebene und der durch den Hebeabschnitt 5 definierten Ebene (wie im vorliegenden Beispiel) deutlich verschieden von 90° ist (hier: deutlich kleiner), dann kann die freie Biegelänge leicht auch dadurch beeinflusst werden, dass die Rampensteilheit in der Ausgangsposition unterschiedlich eingestellt werden kann. Das heisst, für ein Teigprodukt A wird die maximale Steigung auf beispielsweise 20° und für ein Teigprodukt B auf beispielsweise 30° eingestellt. Diese Einstellbarkeit der Rampe ist nicht mit dem aus dem Stand der Technik bekannten Ändern der Rampe zu verwechseln. Bei der erfindungsgemässen Einstellbarkeit der Rampe geht es nämlich darum, dass die während des Betriebs (d.h. während eines bestimmten Produktionslaufes) fest vorgegebenen oberen und unteren Rampenstellungen zwischen verschiedenen Produktionsläufen unterschiedlich eingestellt werden können. Beim Stand der Technik sind dagegen die untere und obere Rampensteilheit für alle Teigprodukte gleich vorgegeben (da z.B. keine Arretierposition unterhalb der obersten Steilheitseinstellung vorgesehen ist).

Wenn die maximal vorgebbare freie Biegelänge gegenüber der minimalen freien Biegelänge um 60% grösser ist, dann können in der Praxis für die meisten Situationen optimale Wickelbedingungen geschaffen werden.

Im Rahmen der Erfindung ist auch vorgesehen, dass die Geschwindigkeit v1 des Teigstücks unterschiedlich vorgegeben werden kann. Bei einem dicken Teigstück sollte die Geschwindigkeit höher sein als bei einem dünnen, weil so die kinetische Energie, die zum Umlenken und Verformen des Teigendes benötigt wird, höher ist.-Um dies zu ermöglichen sind geeignete Antriebsmotoren mit einstellbarer Geschwindigkeit vorzusehen. Die Geschwindigkeit kann z.B. an einem Steuerpult der Wickelmaschine stufenweise oder im Rahmen von unterschiedlichen Betriebsprogrammen gewählt werden. Der Einstellbereich kann z.B. +/-20% der Grundgeschwindigkeit betragen.

Die Funktionsweise der erfindungsgemässen Vorrichtung ist wie folgt: Teigstücke, welche in einem früheren Schritt bereits so vorbereitet worden sind, dass sie die richtige Dicke und die richtige Form (Dreieck, Rechteck etc.) aufweisen, werden über einen nicht dargestellten Fördermechanismus auf die Walze 1 zugeführt. Es versteht sich von selbst, dass die Teigstücke im richtigen Abstand und mit der richtigen Orientierung zugefördert werden (dreieckige oder trapezförmige Teigstücke für Gipfel z.B. mit einer Dreiecksbasisseite der Transportrichtung zugewandt). Eine allfällige Füllung ist ebenfalls schon am entsprechenden Ort, z.B. mittig, auf den Teigstücken verteilt. Die Walze 1 transportiert die Teigstücke weiter auf die Rampe 4. Zum Strecken von Teigstücken (mit oder ohne Füllung) kann die Oberfläche der Rampe 4 eine etwas höhere Geschwindigkeit als die Oberfläche der Walze 1 haben.

Das Teigstück wird mittels der Rampe in Transportrichtung schräg nach oben weitergefördert. Sobald der vorderste Teil des Teigstücks die Übergangsstelle 12 erreicht hat, welche die Form eines abgerundeten stumpfen Winkels aufweist, wird dieser Teil aufgrund der gewissen Formstabilität und Trägheit des Teiges von der Förderfläche abgehoben; er bewegt sich im Wesentlichen in der Verlängerung der Rampe weiter schräg nach oben. Dabei muss darauf geachtet werden, dass der Teig nicht auf der Förderfläche, bzw. an den Riemen, haftet. Die Reibung zwischen Teig und Förderfläche soll lediglich ein Gleiten des Teigs auf der Förderfläche verhindern, die Riemen können z.B. aus Gummi gefertigt sein - andere Förderflächen z.B. eine Oberfläche aus einem Filzmaterial aufweisen.

Nach einer gewissen Zeit, welche von der Fördergeschwindigkeit des unteren Riemenförderers 6 und vom Abstand zwischen Übergangsstelle 12 und Hebeabschnitt 5 abhängt, trifft der vorderste, angehobene Teil des Teigstücks auf den Hebeabschnitt 5. Kurz vor diesem Zeitpunkt wird das Umlenkelement (Welle 9) des unteren Riemenförderers, mittels des Hebels 14 in ihre hintere Position, nahe der Umlaufwalze 18 bewegt (siehe Fig. 2). Dadurch bewegt sich die Übergangsstelle entlang der Rampenoberfläche entgegen der Transportrichtung schräg nach unten: die Rampe wird kürzer, ihre Steigung behält sie aber ungefähr bei. Durch diese Bewegung verliert ein zusätzlicher Teil des Teigstücks den Kontakt mit der Förderfläche, nämlich der Teil, welcher auf dem vorderen Teilstück der Rampe gelegen hat, die Lage des Teigstücks ändert sich aber nicht wesentlich.

Wenn nun die Stirnseite des Teigstücks den Hebeabschnitt 5 erreicht hat und von ihm erfasst worden ist, wird das Umlenkelement 10 des oberen Riemenförderers 6 entlang der Wickelfläche 23 in seine (in Transportrichtung betrachtet) vordere Position in Richtung der Umlaufwalze 22 bewegt, so dass der Hebeabschnitt 5 etwa um seine Hälfte verlängert wird. Die Vorrichtung zeigt nun die in Fig. 2 dargestellte Konfiguration. Es ist deutlich sichtbar, dass der Eingangsbereich 3 nun deutlich länger und auch flacher ist als in der anfänglichen Lage gemäss Fig. 1.

Das obere und das untere Umlenkelement können, anstatt zeitlich versetzt wie oben beschrieben, auch gleichzeitig verschoben werden. Bei den in der Regel angestrebten hohen Bandgeschwindigkeiten ist es erforderlich, die Positionen sehr schnell (quasi schlagartig) zu wechseln.

Der Riemenförderer 6 bewegt sich im Bereich des Hebeabschnitts 5 weiter entgegen der Transportrichtung und nimmt das vordere Ende des Teigstücks mit, wodurch dieses aufgestellt wird. (Um das Mitnehmen des Teigstücks sicherzustellen kann die Oberfläche des Hebeabschnitts bzw. der Riemen spezielle Reibflächen, z.B. eine Riffelung, aufweisen.) Vom Hebeabschnitt 5 wird der vordere Teil auf den Rückzugsabschnitt 7 weiter gefördert, welcher ebenfalls entgegen der Transportrichtung läuft und dem Ende des Teigstücks einen Richtungswechsel nach schräg unten gibt. Dies führt zum definitiven Einschlag des Teigstücks.

Ist das Teigprodukt mit einer Füllung versehen, wird durch den oben beschriebenen Prozess, welcher den Einschlag und eine erste Wicklung des Teigs bewirkt, der Teig regelrecht um die Füllung herumgeführt. Die Füllung selbst erfährt (ausser dem Gewicht einer Teiglage nach dem Einschlag) geringe äussere Kräfte, bleibt also an jenem Ort auf dem Teigstück, auf welchen sie ursprünglich aufgebracht wurde. Ein seitliches Herausdrücken oder Herausquellen der Füllung wird somit vermieden.

Da der obere Riemenförderer 8 und damit der Hebeabschnitt 5 und die Wickelfläche 23 mit einer geringeren Geschwindigkeit als die Transportfläche 20 bewegt werden, z.B. mit ungefähr der halben Geschwindigkeit, werden die Teigstücke beim Einrollen gleichzeitig in Transportrichtung gefördert. Die leichte Trichterform des Eingangsbereichs 3 bewirkt eine allmähliche Verdichtung der innersten Wicklung auf einen gewünschten Querschnitt, welcher der kleinsten Öffnung des Wickelkanals 11 ungefähr bei der zweiten Übergangsstelle 13 entspricht. Die äusseren Wicklungen erfolgen im Wickelkanal 11. Weil dadurch der Querschnitt des Teigprodukts allmählich zunimmt, weitet sich der Wickelkanal entsprechend allmählich auf, bis an deinem ausgangsseitigen Ende die Teigprodukte fertig gerollt sind und auf eine (nicht dargestellte) Fördervorrichtung abgegeben werden können.

Durch das Verschieben der Umlenkelemente erhalten die Transportfläche 20 und der Hebeabschnitt 5 im Eingangsbereich 3 eine deutlich höhere Elastizität, weil die entsprechenden freien, also nicht durch Wellen oder Umlaufwalzen gestützten, Abschnitte der Riemen deutlich verlängert sind. Dieser Umstand trägt zu den hervorragenden Eigenschaften der erfindungsgemässen Vorrichtung bei.

Sobald der Eingangsbereich 3 frei ist und sich das Teigprodukt im Wickelkanal befindet, bewegen sich die Umlenkelemente der beiden Riemenförderer, die Wellen 9, 10 wieder in ihre erste Lage zurück, d.h. die Welle 9 in ihre vordere und die Welle 10 in ihre hintere Position, so dass ein nächstes Teigstück in den Eingangsbereich 3 aufgenommen werden kann.

Anhand der Figuren 4a und 4b wurde ein Ablauf beschrieben, bei welchem die Welle 9 zu Beginn in einer (in Transportrichtung) vorderen Position ist und sich beim bzw. nach dem Einschlagen des vorderen Teigendes in eine hintere Position bewegt. Diese erste Betriebsart eignet sich besonders für dünnere Teigstücke. Bei dickeren Teigstücken hat es sich als vorteilhaft erwiesen, wenn die Welle 9 zunächst in der (in Transportrichtung) hinteren Position ist, um sich beim Einschlagen des freien Biegeendes des Teigstücks nach vom zu bewegen. Bei dieser zweiten Betriebsart, verschieben sich die Welle 9 und 10 "parallel" (d.h. in gleicher Richtung).

Eine erfindungsgemässe Vorrichtung kann zusätzlich eine zweite Walze vorsehen, welche mit der Wälze 1 zusammenwirkt und ein Strecken des zugeführten Teigs unmittelbar vor der Bearbeitung erlaubt, sofern die Teigprodukte keine Füllung enthalten. Der Teig wird einerseits durch den Druck der beiden Walzen ausgewalzt und andererseits durch unterschiedliche Geschwindigkeiten der Walzen und der Rampe 4 gedehnt. So kann z.B. ein Teigstück um bis zu 50% gedehnt werden.

Die Riemenförderer 2, 6, 8 können so ausgeführt sein, dass die Förderflächen, insbesondere die Transportfläche 20 und die Wickelfläche 23 eine dem Teigprodukt angepasste Form aufweisen. Sie können z.B. eine zentrale Mulde aufweisen, in welche der Mittelteil des Gebäcks zu liegen kommt. Auf diese Art und Weise erfährt der - möglicherweise gefüllte - Mittelteil einen geringen Druck, während die Randteile durch den höheren Druck zusammengedrückt werden, was ein Auslaufen der Füllung verhindert und dem Teigprodukt das gewünschte Aussehen verleiht. Mit Vorteil verbreitet sich die Mulde in Transportrichtung, so dass sie dem aufgrund des Wicklungsvorgangs breiter werdenden Mittelteil des Teigprodukts angepasst bleibt.

Als funktionelle Vereinfachung kann eine erfindungsgemässe Vorrichtung anstelle des dritten Riemenförderers 8 mit dem Rückzugsabschnitt 7 auch eine fest montierte Platte oder ein Blech vorsehen, worauf der Teig gleitet und nach unten gedrückt wird, so dass der Einschlag des Teigs erfolgt.

Anstelle von Riemenförderern 2, 6, 8 können auch Förderbänder vorgesehen werden, wobei in diesem Fall die Hebel 14, 16 innerhalb der von den Förderbändern begrenzten Bereiche gelagert sind oder seitlich angelenkt werden.

Sensoren, z.B. Lichtschranken, können die momentane Position der Teigstücke erfassen und eine Steuerung kann die Bewegungen der Umlenkelemente und damit die Positionsänderungen der Übergangsstellen entsprechend steuern. Auch die Geschwindigkeiten der Walzen und Fördermittel kann aufgrund der erfassten Werte angepasst werden.

Die Vorrichtung kann mittels manuell oder elektrisch verstellbarer Achsen, welche während des Betriebs fixiert sind, an verschiedene Aufgaben angepasst werden. Die Neigung des Riemenförderers 8 und damit des Rückzugsabschnitts 7 kann durch Justierung der Position der Umlaufwalze 24 geschehen. Die Spannung der Riemen der Riemenförderer 2, 6 kann durch entsprechende Positionierung der Umlaufwalzen 19, 22 dem hergestellten Teigprodukt angepasst werden. Ähnlicherweise kann die Form des Eingangsbereichs 3 und des Wickelkanals 1 1 mittels Justierung der Schwenkachsen 15, 17 verändert werden. Die genannten Elemente können gefedert gelagert werden, was die Elastizität der Fördermittel weiter erhöht.

Schliesslich kann die Vorrichtung in ein System zur Teigverarbeitung integriert werden, in dem z.B. eine Schneide- und Befüllvorrichtung vorgelagert und eine Verpackungsvorrichtung nachgelagert sind.

Zusammenfassend ist festzustellen, dass die Erfindung eine Vorrichtung zum Herstellen von gewickelten Teigprodukten angibt, welche mechanisch einfach und robust ausgebildet ist und zum Wickeln von ungefüllten und gefüllten Gipfeln geeignet ist.

## Patentansprüche

1. Vorrichtung zum Wickeln eines Teigstücks (25) mit einem Eingangsbereich (3) zum Bewirken eines Einschlags eines angeförderten Teigstücks (25), einem Wickelkanal (11) zum Aufwickeln des Teigstücks und einer Biegeende-Freigabevorrichtung (4/12) zur Freigabe eines vorderen Endes des angeförderten Teigstücks (25), wobei die Biegeende-Freigabevorrichtung (4/12) eine Übergangsstelle (12) zwischen Eingangsbereich (3) und Wickelkanal (11) umfasst, **dadurch gekennzeichnet, dass** die Übergangsstelle (12) zwischen einer in Transportrichtung hinteren und einer in Transportrichtung vorderen Position hin- und herbewegbar ist, derart dass sie jeweils beim bzw. nach dem Einschlagen des vorderen Endes des angeförderten Teigstücks von einer in Transportrichtung vorderen in eine hintere Position bzw. umgekehrt bewegbar ist.

2. Vorrichtung nach Anspruch 1, **dadurch gekennzeichnet, dass** die Biegeende-Freigabevorrichtung (4/12) weiter eine Rampe (4) mit im Wesentlichen gleichbleibender Steigung aufweist, und eine in einem Abstand zur Biegeende-Freigabevorrichtung (4/12) angeordnete Biegeende-Umlenkvorrichtung (5) zum Umlenken des von der Biegeende-Freigabevorrichtung (4/12) um eine freie Biegelänge vorstehenden vorderen Endes des angeförderten Teigstücks (25) vorhanden ist, so dass das Teigstück (25) eingeschlagen und gewickelt werden kann, wobei Mittel (14) zum Einstellen des die freie Biegelänge (L1) bestimmenden Abstandes zwischen Biegeende-Freigabevorrichtung (4/12) und Biegeende-Umlenkvorrichtung (5) vorgesehen sind, um die freie Biegelänge (L1) an die Eigenschaften des Teigstücks (25) anpassen zu können.

3. Vorrichtung nach Anspruch 2, **dadurch gekennzeichnet, dass** die Biegeende-Freigabevorrichtung und die Biegeende-Umlenkvorrichtung Fördermittel mit einem Antrieb mit einer in Abhängigkeit von den Eigenschaften des Teigstücks einstellbaren Betriebsgeschwindigkeit (v1, v2) aufweisen.

4. Vorrichtung nach Anspruch 2, **dadurch gekennzeichnet, dass** an einem Ende der Rampe (4) das vordere Ende des Teigstücks (25) freigegeben wird.

5. Vorrichtung nach Anspruch 4, **dadurch gekennzeichnet, dass** die Rampe eine einstellbare Länge hat.

6. Vorrichtung nach einem der Ansprüche 1 bis 5, **dadurch gekennzeichnet, dass** die bewegbare Übergangsstelle (12) durch das Ende der Rampe gebildet wird,wobei die Rampe an einem unteren, das Teigstück tragenden Fördermittel (2) ausgebildet ist.

7. Vorrichtung nach einem der Ansprüche 1 bis 6, **dadurch gekennzeichnet, dass** an einem oberen Fördermittel (6) eine zweite Übergangsstelle (13) ausgebildet ist, welche in Transportrichtung betrachtet gleich- oder gegensinnig zur ersten Übergangsstelle (12) veränderbar ist.

8. Vorrichtung nach einem der Ansprüche 1 bis 7, **dadurch gekennzeichnet, dass** ein entgegen zur Transportrichtung nach unten geneigtes Einschlagsmittel (7), insbesondere ein bandartiges Fördermittel (8), vorgesehen ist, welches das von der Biegeende-Umlenkvorrichtung umgelenkte Ende des Teigstücks um einen zusätzlichen Winkel nach unten umlenkt.

9. Vorrichtung nach einem der Ansprüche 1 bis 8, **dadurch gekennzeichnet, dass** die mindestens eine Übergangsstelle (12, 13) durch ein Umlenkelement (9, 10) des bandartigen das Teigstück tragenden Fördermittels (2) bzw. eines Wickelmittels (6), insbesondere eines Riemenförderers, gebildet wird und dass das Umlenkelement (9, 10) an einem um eine Schwenkachse (15, 17) bewegbaren Schwenkmechanismus (14, 16) gelagert ist.

10. Vorrichtung nach Anspruch 9, **dadurch gekennzeichnet, dass** das Fördermittel (2) zwei einseitige Umlaufwalzen (18, 19) hat, um welche ein endloses Band geführt ist, und dass zwischen dem Umlenkelement (9) und der ausgangsseitig des Wickelkanals angeordneten Umlenkwalze (19) das Band unterstützungsfrei gespannt ist, um eine elastische nachgiebige Begrenzung des Wickelkanals (11) zu bilden.

11. Verfahren zum Herstellen von gewickelten Teigprodukten,
wobei in einem Eingangsbereich (3) einer Wickelvorrichtung ein Einschlag eines in Transportrichtung vorderen Endes eines angeförderten Teigstücks bewirkt wird und
in einem nachfolgenden Wickelkanal (11) das Teigstück aufgewickelt wird,
**dadurch gekennzeichnet, dass**
eine Übergangsstelle (12) zwischen Eingangsbereich (3) und Wickelkanal (11) von einer bezüglich des Einschlags in Transportrichtung vorderen in eine bezüglich des Einschlags in Transportrichtung hintere Position bewegt wird, derart dass sie jeweils beim bzw. nach dem Einschlagen des vorderen Endes des angeförderten Teigstücks von einer in Transportrichtung vorderen in eine hintere Position bzw. umgekehrt bewegbar ist.

## Claims

1. Apparatus for rolling up a piece of dough (25), having an inlet region (3) for effecting an impact on an incoming piece of dough (25), a rolling-up channel (11) for rolling up the piece of dough and a curled tip releasing device (4/12) for releasing a leading end of the incoming piece of dough (25), wherein the curled tip releasing device (4/12) comprises a transition point (12) between inlet region (3) and rolling-up channel (11), **characterised in that** the transition point (12) is movable back and forth between a rear position in the direction of transport and a front position in the direction of transport, such that it is movable during respectively after impact on the leading end of the incoming piece of dough from a front position in the direction of transport into a rear position and vice versa.

2. Apparatus according to Claim 1, **characterised in that** the curled tip releasing device (4/12) additionally comprises a ramp (4) having a substantially constant inclination, and a curled tip diverting device (5) arranged at a distance from the curled tip releasing device (4/12) is present for diverting the leading end of the incoming piece of dough (25) protruding from the curled tip releasing device (4/12) by a free curled length, so that the piece of dough (25) can be impacted and curled up, wherein means (14) for adjusting the distance determining the free curled length (L1) are provided between the curled tip releasing device (4/12) and the curled tip diverting device (5), in order to be able to adapt the free curled length (L1) to the properties of the piece of dough (25).

3. Apparatus according to Claim 2, **characterised in that** the curled tip releasing device and the curled tip diverting device comprises conveying means having a drive with an operating speed (v1, v2) adjustable in dependence on the properties of the piece of dough.

4. Apparatus according to Claim 2, **characterised in that** the leading end of the piece of dough (25) is released at one end of the ramp (4).

5. Apparatus according to Claim 4, **characterised in that** the ramp has an adjustable length.

6. Apparatus according to any one of Claims 1 to 5, **characterised in that** the movable transition point (12) is formed by the end of the ramp, the ramp being constructed on a lower conveying means (2) supporting the piece of dough.

7. Apparatus according to any one of Claims 1 to 6, **characterised in that** on an upper conveying means (6) there is formed a second transition point (13) which, viewed in the direction of transport, is alterable in the same direction as or the opposite direction to the first transition point (12).

8. Apparatus according to any one of Claims 1 to 7, **characterised in that** an impact means (7) inclined downwards against the direction of transport, in particular a belt-like conveying means (8), is provided, by which the end of the piece of dough diverted by the curled tip diverting device is diverted through an additional angle downwards.

9. Apparatus according to any one of Claims 1 to 8, **characterised in that** the at least one transition point (12, 13) is formed by a guide element (9, 10) of the belt-like conveying means (2) and a rolling-up means (6) respectively supporting the piece of dough, in particular a belt conveyor, and **in that** the guide element (9, 10) is mounted on a pivoting mechanism (14, 16) movable about a pivot axis (15, 17).

10. Apparatus according to Claim 9, **characterised in that** the conveying means (2) has two one-way rotating rollers (18, 19) around which an endless belt is guided, and **in that** between the guide element (9) and the diverting roller (19) arranged at the output end of the rolling-up channel, the belt is tensioned without support in order to form a resilient, yielding limitation of the rolling-up channel (11).

11. A method for the preparation of rolled-up dough products,
wherein in an inlet region (3) of a rolling-up apparatus a leading end in the direction of transport of an incoming piece of dough is subjected to an impact and
in a subsequent rolling-up channel (11) the piece of dough is rolled up,
**characterised in that**
a transition point (12) between the inlet region (3) and the rolling-up channel (11) is moved from a front position in the direction of transport in relation to the impact into a rear position in the direction of transport in relation to the impact, such that it is movable in each case during respectively after the impact on the leading end of the incoming piece of dough from a front to a rear position in the direction of transport or vice versa.

## Revendications

1. Dispositif pour l'enroulement d'un produit pâteux (25) avec une zone d'entrée (3) pour permettre l'introduction d'un produit pâteux transporté (25), un canal d'enroulement (11) pour enrouler le produit pâteux et un dispositif de libération d'extrémité de pliage (4/12) pour libérer une extrémité avant du produit pâteux transporté (25), dans lequel le dispositif de libération d'extrémité de pliage (4/12) comprend un poste de transfert (12) entre la zone d'entrée (3) et le canal d'enroulement (11), **caractérisé en ce que** le poste de transfert (12) est mobile en va-et-vient entre une position arrière dans la direction de transport et une position avant dans la direction de transport, de telle sorte qu'il peut être déplacé respectivement après l'introduction de l'extrémité avant du produit pâteux acheminé à partir d'une position avant jusque dans une position arrière dans la direction de transport ou vice versa.

2. Dispositif selon la revendication 1, **caractérisé en ce que** le dispositif de libération d'extrémité de pliage (4/12) présente, de plus, une rampe (4) avec une montée sensiblement constante, et un dispositif de renvoi d'extrémité de pliage (5) disposé à une certaine distance par rapport au dispositif de transfert d'extrémité de pliage (4/12) pour le renvoi de l'extrémité avant se trouvant en saillie sur le dispositif de libération d'extrémité de pliage (4/12) d'une longueur de pliage libre, du produit pâteux acheminé (25), de sorte que le produit pâteux (25) peut être introduit et enroulé, tandis que des moyens (14) sont prévus pour l'ajustement de la distance déterminant la longueur de pliage libre (L1) entre le dispositif de transfert d'extrémité de pliage (4/12) et le dispositif de renvoi d'extrémité de pliage (5), sur la longueur de pliage libre (L1), afin de pouvoir être adapté aux propriétés du produit pâteux (25).

3. Dispositif selon la revendication 2, **caractérisé en ce que** le dispositif de libération d'extrémité de pliage et le dispositif de renvoi d'extrémité de pliage présentent des moyens de manutention avec un entraînement à une vitesse de fonctionnement (v1, v2) pouvant être ajustée en fonction des propriétés du produit pâteux.

4. Dispositif selon la revendication 2, **caractérisé en ce que**, sur une extrémité de la rampe (4), est libérée l'extrémité avant du produit pâteux (25).

5. Dispositif selon la revendication 4, **caractérisé en ce que** la rampe présente une longueur ajustable.

6. Dispositif selon l'une des revendications 1 à 5, **caractérisé en ce que** le dispositif de transfert mobile (12) est formé par l'extrémité de la rampe, tandis que la rampe est formée sur un moyen de manutention inférieur (2) portant le produit pâteux.

7. Dispositif selon l'une des revendications 1 à 6, **caractérisé en ce que**, sur un moyen de manutention supérieur (6), est formé un deuxième poste de transfert (13) qui peut être modifié dans la direction de transport, vu dans le même sens ou dans le sens contraire par rapport au poste de transfert (12).

8. Dispositif selon l'une des revendications 1 à 7, **caractérisé en ce qu'**il est prévu un moyen d'introduction (7) en opposition à la direction de transport, incliné vers le bas, en particulier un moyen de manutention du type à bande transporteuse (8), qui fait dévier vers le bas l'extrémité renvoyée par le dispositif de renvoi d'extrémité de pliage du produit pâteux selon un angle supplémentaire vers le bas.

9. Dispositif selon l'une des revendications 1 à 8, **caractérisé en ce que** le au moins un poste de transfert (12, 13) est formé par un élément de renvoi (9, 10) du moyen de manutention (2) du type à bande portant le produit pâteux ou d'un moyen d'enroulement (6), en particulier un transporteur à bande, et **en ce que** l'élément de renvoi (9, 10) est logé sur un mécanisme de basculement (14, 16) pouvant basculer autour d'un axe de basculement (15, 17).

10. Dispositif selon la revendication 9, **caractérisé en ce que** le moyen de manutention (2) comporte deux cylindres de révolution d'un seul côté (18, 19), autour duquel est menée une bande sans fin, et **en ce qu'**entre l'élément de renvoi (9) et le cylindre de renvoi (19) disposé sur le côté sortie du canal d'enroulement, la bande est tendue sans support pour former une limitation élastiquement souple du canal d'enroulement (11).

11. Procédé pour la fabrication de produits pâteux enroulés,
dans lequel, dans une zone d'entrée (3) d'un dispositif d'enroulement, s'effectue une introduction d'une extrémité avant d'un produit pâteux acheminé dans la direction de transport et
dans le canal d'enroulement consécutif (11), est enroulé le produit pâteux,
**caractérisé en ce que**
un poste de transfert (12) est déplacé entre la zone d'entrée (3) et le canal d'enroulement (11) depuis une position avant par rapport à l'introduction dans la direction de transport vers une position arrière de telle sorte qu'il est déplacé, respectivement, lors de l'entrée de l'extrémité avant du produit pâteux acheminé vers une position avant dans la direction de transport vers une position arrière ou vice versa.
